(19) **Europäisches Patentamt / European Patent Office / Office européen des brevets**

(11) **EP 4 764 837 A1**

(12) **EUROPEAN PATENT APPLICATION**

(43) Date of publication:
24.06.2026 Bulletin 2026/26

(51) International Patent Classification (IPC):
G06F 8/75 (2018.01)   G06F 11/3604 (2025.01)
G06F 8/71 (2018.01)   G06F 8/72 (2018.01)

(21) Application number: 25219133.3

(22) Date of filing: 27.11.2025

(52) Cooperative Patent Classification (CPC):
G06F 8/75; G06F 11/3616; G06F 21/602;
G06F 8/71; G06F 8/72

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 20.12.2024 IN 202421101331

(71) Applicant: Tata Consultancy Services Limited
Maharashtra (IN)

(72) Inventors:
• BHOWMICK, AMIT
560066 Bangalore, Karnataka (IN)
• VIDHANI, KUMAR MANSUKHLAL
382009 Gandhinagar, Gujarat (IN)
• ALASINGARA, BHATTACHAR
560066 Bangalore, Karnataka (IN)

(74) Representative: Goddar, Heinz J.
Boehmert & Boehmert
Anwaltspartnerschaft mbB
Pettenkoferstrasse 22
80336 München (DE)

(54) **ESTIMATION OF EFFORTS IN MIGRATING APPLICATIONS TO POST QUANTUM CRYPTOGRAPHY (PQC) STATE**

(57) The ability to accurately estimate the Lines of Codes (LoC) needed to complete migration of application has been a challenge over the past decades. Embodiments disclosed herein provide a method and system for estimation of efforts in migrating applications to post quantum cryptography (PQC) state. The system, based on a determined cyclomatic complexity for one or more components present in a refined slicing output and a refined coupling output is estimated. Further, an effort of migration is estimated using the cyclomatic complexity and number of LoC impacted by the one or more cryptographic APIs.

identifying, via one or more hardware processors, one or more cryptographic APIs in an input application — 202

performing, via the one or more hardware processors, forward slicing and backward slicing for the one or more cryptographic APIs, based on a slicing criterion, to generate a slicing output comprising a plurality of slices of the one or more cryptographic APIs — 204

determining, via the one or more hardware processors, a plurality of Lines of Code (LoC) for at least one of the one or more cryptographic APIs, that requires replacement — 206

performing, via the one or more hardware processors, a coupling calculation between one or more components within the input application, to generate a coupling output capturing how the one or more components are connected with each other, in the input application — 208

extracting, via the one or more hardware processors, a plurality of code fragments in the LoC by refining the slicing output and the coupling output — 210

computing, via the one or more hardware processors, a number of LoC impacted by the one or more cryptographic APIs, from the plurality of code fragments extracted — 212

estimating, via the one or more hardware processors, a cyclomatic complexity for one or more components present in the refined slicing output and the refined coupling output — 214

estimating, via the one or more hardware processors, an effort of migration using the cyclomatic complexity, and the number of LoC impacted by the one or more cryptographic APIs — 216

200

FIG. 2

EP 4 764 837 A1

**Description**

CROSS-REFERENCE TO RELATED APPLICATIONS AND PRIORITY

The present application claims priority to Indian application no. 202421101331, filed on December 20, 2024.

TECHNICAL FIELD

The disclosure herein generally relates to effort estimation, and, more particularly, to a method and system for estimation of efforts in migrating applications to Post Quantum Cryptography (PQC) State in effort estimation.

BACKGROUND

Quantum computers pose significant threats to enterprise applications which are relying on modem day cryptography to secure data. Therefore, migrating the applications to the Post Quantum Cryptography (PQC) state is essential. The migration can be achieved by replacing current cryptography APIs in use with PQC APIs which are considered safe against quantum threats. Lines of Code (LoC) is one of the important parameters in estimation of time and efforts required to either develop or migrate the applications. This parameter is used in some key effort estimation models. Accurately estimating how many LoC need to be changed in an enterprise application is quite challenging as it requires the extraction of a portion of application that is computing information into a cryptography API in use as well as a portion of application that is using the output generated by the cryptography API. Moreover, application components might be coupled in a way that could pose a challenge in accurately estimating the Lines of Code required to migrate application to PQC state.

The ability to accurately estimate LoC needed to complete migration/ updating/building of application has been a challenge over the past decades. For a successful software project, accurate prediction of the cost, time and effort is a very much essential task. There are different types of software cost estimation models which can be categorized into Algorithmic models and learning oriented models. The Algorithmic models include Constructive Cost Model (COCOMO), Function point analysis, Putnam model, etc. The learning-oriented models or the machine learning methods include Artificial Neural Networks (ANN's), Fuzzy Logic (FL), analogy based, Bayesian Network. In the absence of reliable dataset which maps classical crypto APIs and their impact on application with Post Quantum Cryptography APIs, most of the AI based approaches can't be used to solve this problem. The Lines of code (LoC) is one of most important parameters that is used in efforts estimation models. Slicing and Coupling based approaches are useful, but they are not precise enough in estimating the LoCs.

SUMMARY

Embodiments of the present disclosure present technological improvements as solutions to one or more of the above-mentioned technical problems recognized by the inventors in conventional systems. For example, in one embodiment, A processor implemented method is provided. The method includes: identifying, via one or more hardware processors, one or more cryptographic Application Programming Interfaces (APIs) in an input application; performing, via the one or more hardware processors, forward slicing and backward slicing for the one or more cryptographic APIs, based on a slicing criterion, to generate a slicing output comprising a plurality of slices of the one or more cryptographic APIs; determining, via the one or more hardware processors, a plurality of Lines of Code (LoC) for at least one of the one or more cryptographic APIs, that requires replacement; performing, via the one or more hardware processors, a coupling calculation between one or more components within the input application, to generate a coupling output capturing how the one or more components are connected with each other, in the input application; extracting, via the one or more hardware processors, a plurality of code fragments in the LoC by refining the slicing output and the coupling output; computing, via the one or more hardware processors, a number of LoC impacted by the one or more cryptographic APIs, from the plurality of code fragments extracted; estimating, via the one or more hardware processors, a cyclomatic complexity for one or more components present in the refined slicing output and the refined coupling output; and estimating, via the one or more hardware processors, an effort of migration using the cyclomatic complexity, and the number of LoC impacted by the one or more cryptographic APIs.

In another aspect of the method, the one or more cryptographic APIs in the input application are identified by executing one or more inventory rules.

In another aspect of the method, the forward slicing and the backward slicing are performed on a System Dependence Graph (SDG) that captures a plurality of dependencies between a plurality of program statements of the input application.

In another aspect of the method, refining the slicing output comprises removing one or more of the plurality of program statements which do not contribute to code replacement, and refining the coupling output comprises of including one or more of the plurality of program statements that impacts behavior of the input application, to refine the plurality of slices.

In another aspect, a system is provided. The system includes one or more hardware processors, a communication interface, and a memory storing a plurality of instructions. The plurality of instructions cause the one or more hardware processors to: identify one or more cryptographic Application Programming Interfaces (APIs) in an input application; perform forward slicing and backward slicing for the one or more cryptographic APIs, based on a slicing criterion, to generate a slicing output comprising a plurality of slices of the one or more cryptographic APIs; determine a plurality of Lines of Code (LoC) for at least one of the one or more cryptographic APIs, that requires replacement; perform a coupling calculation between one or more components within the input application, to generate a coupling output capturing how the one or more components are connected with each other, in the input application; extract a plurality of code fragments in the LoC by refining the slicing output and the coupling output; compute a number of LoC impacted by the one or more cryptographic APIs, from the plurality of code fragments extracted; estimate a cyclomatic complexity for one or more components present in the refined slicing output and the refined coupling output; and estimate an effort of migration using the cyclomatic complexity, and the number of LoC impacted by the one or more cryptographic APIs.

In another aspect, the one or more hardware processors are configured to identify the one or more cryptographic APIs in the input application by executing one or more inventory rules.

In another aspect, the one or more hardware processors are configured to perform the forward slicing and the backward slicing on a System Dependence Graph (SDG) that captures a plurality of dependencies between a plurality of program statements of the input application.

In another aspect, the one or more hardware processors are configured to refine the slicing output by removing one or more of the plurality of program statements which do not contribute to code replacement, and refine the coupling output by including one or more of the plurality of program statements that impacts behavior of the input application, to refine the plurality of slices.

In yet another aspect, a non-transitory computer readable medium is provided. The non-transitory computer readable medium includes a plurality of instructions, which when executed cause the one or more hardware processors to: identify one or more cryptographic Application Programming Interfaces (APIs) in an input application; perform forward slicing and backward slicing for the one or more cryptographic APIs, based on a slicing criterion, to generate a slicing output comprising a plurality of slices of the one or more cryptographic APIs; determine a plurality of Lines of Code (LoC) for at least one of the one or more cryptographic APIs, that requires replacement; perform a coupling calculation between one or more components within the input application, to generate a coupling output capturing how the one or more components are connected with each other, in the input application; extract a plurality of code fragments in the LoC by refining the slicing output and the coupling output; compute a number of LoC impacted by the one or more cryptographic APIs, from the plurality of code fragments extracted; estimate a cyclomatic complexity for one or more components present in the refined slicing output and the refined coupling output; and estimate an effort of migration using the cyclomatic complexity, and the number of LoC impacted by the one or more cryptographic APIs.

In another aspect, the non-transitory computer readable medium causes the one or more hardware processors to identify the one or more cryptographic APIs in the input application by executing one or more inventory rules.

In another aspect, the non-transitory computer readable medium causes the one or more hardware processors to perform the forward slicing and the backward slicing on a System Dependence Graph (SDG) that captures a plurality of dependencies between a plurality of program statements of the input application.

In another aspect, the non-transitory computer readable medium causes the one or more hardware processors to refine the slicing output by removing one or more of the plurality of program statements which do not contribute to code replacement, and refine the coupling output by including one or more of the plurality of program statements that impacts behavior of the input application, to refine the plurality of slices.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1A illustrates an exemplary system for estimation of efforts in migrating applications to post quantum cryptography (PQC) state, according to some embodiments of the present disclosure.
FIG. 1B illustrates an example implementation of the system of FIG. 1A, according to some embodiments of the present disclosure.
FIG. 2 is a flow diagram depicting steps involved in the process of estimation of efforts in migrating applications to the PQC state, using the system of FIG. 1A, according to some embodiments of the present disclosure.

FIG. 3 is an example diagram depicting coupling between different components, according to some embodiments of the present disclosure.

FIG. 4 depicts a sample program, according to some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

The ability to accurately estimate LoC needed to complete updating/building of application has been a challenge over the past decades. For a successful software project, accurate prediction of the cost, time and effort is a very much essential task. There are different types of software cost estimation models which can be categorized into Algorithmic models and learning oriented models. The Algorithmic models include Constructive Cost Model (COCOMO), Function point analysis, Putnam model, etc. The learning-oriented models or the machine learning methods include Artificial Neural Networks (ANN's), Fuzzy Logic (FL), analogy based, Bayesian Network. In the absence of reliable dataset which maps classical crypto APIs and their impact on application with Post Quantum Cryptography APIs, most of the AI based approaches can't be used to solve this problem. The Lines of code (LoC) is one of most important parameters that is used in efforts estimation models. Slicing and Coupling based approaches are useful, but they are not precise enough in estimating the LoCs.

To address these challenges, embodiments disclosed herein provide a method and system for estimation of LoC in migrating/ updating/building applications to post quantum cryptography (PQC) state. In this method, one or more cryptographic APIs in an input application are identified, and further, a forward slicing and backward slicing for the one or more cryptographic APIs is performed, based on a slicing criterion, to generate a slicing output comprising a plurality of slices of the one or more cryptographic APIs. Further, a plurality of Lines of Code (LoC) are determined for at least one of the one or more cryptographic APIs, that requires replacement. Further, a coupling calculation between one or more components within the input application is performed to generate a coupling output capturing how the one or more components are connected with each other, in the input application. Further, a plurality of code fragments are extracted by refining the slicing output and the coupling output. Further, a number of LoC impacted by the one or more cryptographic APIs is computed, from the plurality of code fragments extracted. Further, a cyclomatic complexity for one or more components present in the refined slicing output and the refined coupling output is estimated. Further, an effort of migration is estimated using the cyclomatic complexity and the number of LoC impacted by the one or more cryptographic APIs.

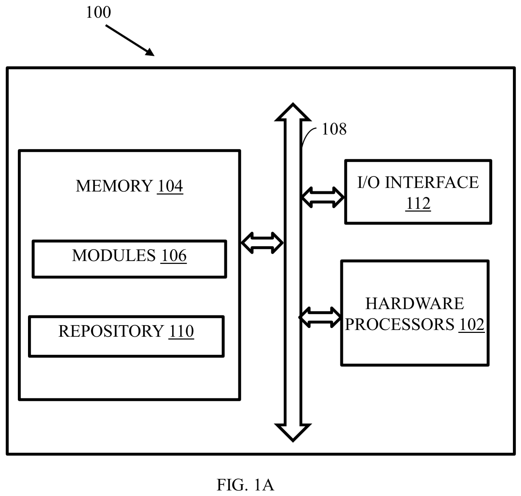

Referring now to the drawings, and more particularly to FIG. 1A through FIG. 4, where similar reference characters denote corresponding features consistently throughout the figures, there are shown preferred embodiments and these embodiments are described in the context of the following exemplary system and/or method.

FIG. 1A illustrates an exemplary system for estimation of efforts in migrating applications to post quantum cryptography (PQC) state, according to some embodiments of the present disclosure.

The system 100 includes or is otherwise in communication with hardware processors 102, at least one memory such as a memory 104, an I/O interface 112. The hardware processors 102, memory 104, and the Input /Output (I/O) interface 112 may be coupled by a system bus such as a system bus 108 or a similar mechanism. In an embodiment, the hardware processors 102 can be one or more hardware processors.

The I/O interface 112 may include a variety of software and hardware interfaces, for example, a web interface, a graphical user interface, and the like. The I/O interface 112 may include a variety of software and hardware interfaces, for example, interfaces for peripheral device(s), such as a keyboard, a mouse, an external memory, a printer and the like. Further, the I/O interface 112 may enable the system 100 to communicate with other devices, such as web servers, and external databases.

The I/O interface 112 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface 112 may include one or more ports for connecting several computing systems with one another or to another server computer. The I/O interface 112 may include one or more ports for connecting several devices to one another or to another server.

The one or more hardware processors 102 may be implemented as one or more microprocessors, microcomputers, microcontrollers, digital signal processors, central processing units, node machines, logic circuitries, and/or any devices that manipulate signals based on operational instructions. Among other capabilities, the one or more hardware processors 102 is configured to fetch and execute computer-readable instructions stored in the memory 104.

The memory 104 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes. In an embodiment, the memory 104 includes a plurality of modules 106.

The plurality of modules 106 include programs or coded instructions that supplement applications or functions performed by the system 100 for executing different steps involved in the method of estimation of efforts in migrating applications to post quantum cryptography (PQC) state, being performed by the system of FIG. 1A. The plurality of modules 106, amongst other things, can include routines, programs, objects, components, and data structures, which performs particular tasks or implement particular abstract data types. The plurality of modules 106 may also be used as, signal processor(s), node machine(s), logic circuitries, and/or any other device or component that manipulates signals based on operational instructions. Further, the plurality of modules 106 can be used by hardware, by computer-readable instructions executed by the one or more hardware processors 102, or by a combination thereof. The plurality of modules 106 can include various sub-modules (not shown). The plurality of modules 106 may include computer-readable instructions that supplement applications or functions performed by the system 100 for the estimation of efforts in migrating applications to post quantum cryptography (PQC) state.

The data repository (or repository) 110 may include a plurality of abstracted piece of code for refinement and data that is processed, received, or generated as a result of the execution of the plurality of modules in the module(s) 106.

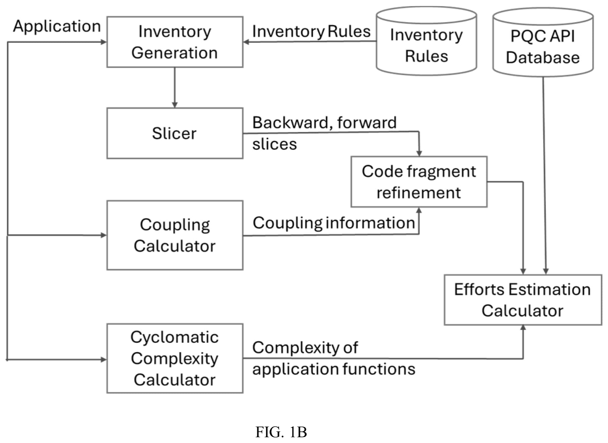

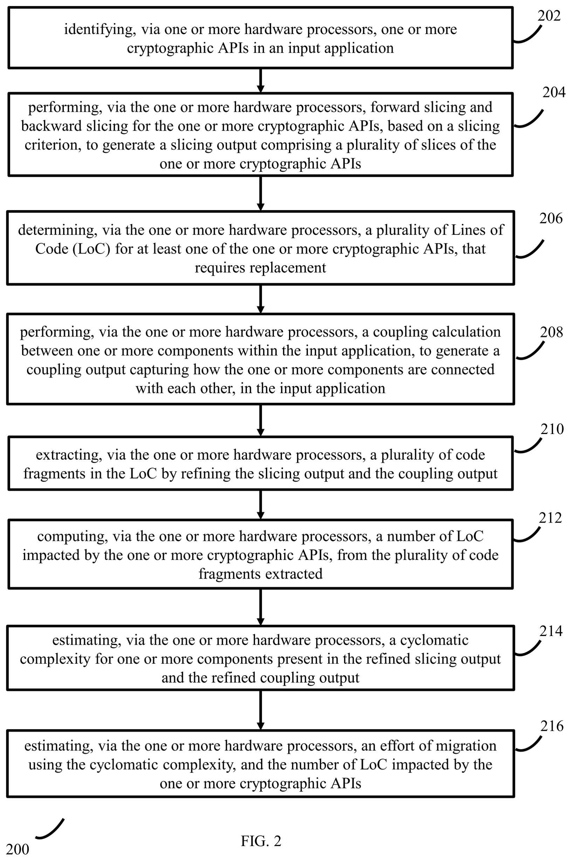

Although the data repository 110 is shown internal to the system 100, it will be noted that, in alternate embodiments, the data repository 110 can also be implemented external to the system 100, where the data repository 110 may be stored within a database (repository 110) communicatively coupled to the system 100. The data contained within such external database may be periodically updated. For example, new data may be added into the database (not shown in FIG. 1A) and/or existing data may be modified and/or non-useful data may be deleted from the database. In one example, the data may be stored in an external system, such as a Lightweight Directory Access Protocol (LDAP) directory and a Relational Database Management System (RDBMS). The example implementation in FIG. 1B depicts the system 100 as having the following components: a slicer, a coupling calculator, a cyclometric complexity calculator and an efforts estimation calculator. Working of the components of the system 100 are now explained with reference to the steps in the flow diagram in FIG. 2, and the components depicted in FIG. 1B.

FIG. 2 is a flow diagram depicting steps involved in the process of estimation of efforts in migrating applications to the PQC state, using the system of FIG. 1A, according to some embodiments of the present disclosure.

In an embodiment, the system 100 comprises one or more data storage devices or the memory 104 operatively coupled to the processor(s) 102 and is configured to store instructions for execution of steps of a method 200 in FIG. 2, by the processor(s) or one or more hardware processors 102. The steps of the method 200 of the present disclosure will now be explained with reference to the components or blocks of the system 100 as depicted in FIG. 1A, and the steps of flow diagram as depicted in FIGS. 2. Although process steps, method steps, techniques or the like may be described in a sequential order, such processes, methods, and techniques may be configured to work in alternate orders. In other words, any sequence or order of steps that may be described does not necessarily indicate a requirement that the steps to be performed in that order. The steps of processes described herein may be performed in any order practical. Further, some steps may be performed simultaneously.

At step 202 of the method 200, the system 100 identifies, via the one or more hardware processors 102, one or more cryptographic APIs in an input application. At this step, the system 100 takes an application binary or source as input, and generates an inventory report. The inventory report or otherwise termed as crypto inventory, conveys which all cryptography APIs are used by the input application. The crypto inventory gives an as-is state of the input application with respect to the cryptography APIs. To generate the inventory report, the system 100 converts code of the input application into a call graph. The call graph is a graph data structure representing caller-callee relationships between functions of the input application. Each node in the call graph represents a function. This is executed by the inventory generation component as depicted in FIG. 1B, which iterates over the call graph, function-by-function, and produces the inventory report. The inventory generation component uses a plurality of inventory rules to generate the inventory report. The inventory generation component operates on binary code, then exact locations of cryptography APIs in source code are obtained using a Binary to source code mapping. The Binary to source code mapping is explained in applicant's Indian patent application number: 202321012791. For example, the system 100 extracts "init", "doFinal" and "getInstance" methods of Cipher and KeyFactory classes along with constructor and "generatePublicKey" methods of RSAPublicKeySpec class as crypto methods of a BurpCrypto application that is being referred to as an example input application.

Further, at step 204 of the method 200, the system 100 performs, via the one or more hardware processors 102, forward slicing and backward slicing for the one or more cryptographic APIs, based on a slicing criterion, to generate a slicing output comprising a plurality of slices of the one or more cryptographic APIs. This may be done by the slicer component as depicted in FIG. 1B. In an embodiment, the forward slicing and the backward slicing are performed on a System Dependence Graph (SDG) that captures a plurality of dependencies between a plurality of program statements of the input application. A program slice is a portion of the input application that is required to execute the slicing criterion. Typically, slicing criterion is a program statement, and slice is a set of program statements that are required to execute the program statement. To compute a program slice, the system 100 executes a slicing computation algorithm for every cryptography API. The slicer component of the system 100 computes a backward slice for a cryptography API. The backward slice captures which program statements of the input application are necessary to execute each of the cryptography APIs. As the input application, which maybe an enterprise application which is using modem cryptography APIs, is to be migrated to Post Quantum Cryptography APIs, it is necessary that the system 100 extracts a portion of the input application that computes all parameters necessary to execute cryptography API. The slicer component extracts that portion which should be removed along with cryptography API. Moreover, the output of cryptography API may be consumed further in the input application. Therefore, it is necessary to extract that portion of the input application which is using the output. A forward slice by the slicer computes exactly that information. An example of the backward slicing performed on the BurpCrypto application which is taken as example input application is given below.

$$this.cipher \ = \ Cipher.getInstance(\text{``RSA''});$$

$$KetFactory \ keyFactory \ = \ KeyFactory.getInstance(\text{``RSA''});$$

$$RSAPublicKeySpec \ keySpec$$

$$= \ new \ RSAPublicKeySpec(config.Modulus, config.Exponent);$$

$$Key \ = \ keyFactory.generatePublic(keySpec);$$

$$cipher.init(Cipher.ENCRYPT\_MODE, key)$$

$$byte[] \ encrypted \ = \ cipher.doFinal(plaintext);$$

This portion of the backward slice is obtained when the invocation of "doFinal" method is given as criterion. The backward slice captures all program statements that are necessary to execute "doFinal" method. A forward slice is computed on the output of "doFinal" method. Therefore, in this case, the criterion remains the same as the backward slice, but the output changes to reflect where "encrypted" data of "byte" array type is consumed in the input application.

Further, at step 206 of the method 200, the system 100 determines, via the one or more hardware processors 102, a plurality of Lines of Code (LoC) for at least one of the one or more cryptographic APIs, that requires replacement. The LoC is determined by using binary to source code module (as disclosed in applicant's Indian patent application number: 202321012791) that maps extracted binary code fragments to corresponding source code fragments.

Further, at step 208 of the method 200, the system 100 performs, via the one or more hardware processors 102, a coupling calculation between one or more components within the input application, to generate a coupling output capturing how the one or more components are connected with each other, in the input application. The coupling calculation captures how strongly two components of an application or software are connected with each other. When classical crypto operations are to be replaced with Post Quantum crypto operations in the input application, impact of the replacement on other components of the input application is to be measured. If a component which is undergoing change due to replacement of crypto operations is tightly coupled to other components, then, the those components also must be changed.

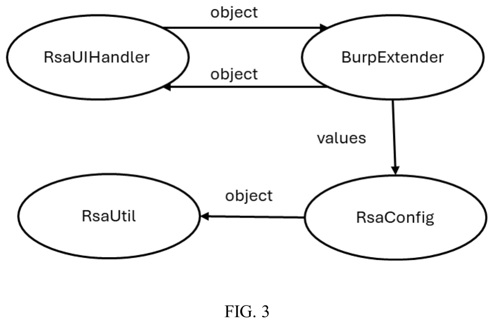

The example input application considered, BurpCrypto, being a Java based application, has multiple classes performing different functionalities. Each class is considered as a separate independent component performing a task. For example, RsaUtil class performs encryption operation using RSA algorithm. It contains an "encrypt" method. RsaConfig class contains configuration parameters used by RsaUtil class. BurpExtender is a main class that supports multiple cryptography operations. It calls RsaUtil class indirectly to perform encryption using the RSA algorithm. RsaUIHandler creates the necessary UI for end user to provide inputs to RSA algorithm. All these classes are connected to each other by passing necessary information to execute encryption operations. An example diagram depicting the coupling between different components is given in FIG. 3.

Further, at step 210 of the method 200, the system 100 extracts, via the one or more hardware processors 102, a plurality of code fragments in the LoC by refining the slicing output and the coupling output. Refining the slicing output includes removing one or more of the plurality of program statements which do not contribute to code replacement, and refining the coupling output comprises of including one or more of the plurality of program statements that impacts behavior of the input application, to refine the plurality of slices. This is done using the code fragment refinement component as in FIG. 1B. This component reduces size of a slice by identifying "independent" control program nodes. The independent control program node of a slice is defined as a node which controls the execution of one or more program nodes of the slice, but there is no direct or indirect data dependency of a slicing criterion node on that node. Such nodes can be safely removed from the slice as these nodes are retained even if a cryptography API is replaced with new Post Quantum Cryptography API. These nodes do not contribute in computing the LoC in source text of the input application.

The following steps are used by the system 100 to identify and remove independent control program nodes and their dependencies.

Step 1: Extract slicing criterion node from a slice.

Step 2: Traverse control dependence edge from the slicing criterion node. Mark the control node reached as the result of control dependence edge.

Step 3: Check data dependence between the control node and the slicing criterion node.

Step 4: If there is no data dependence then, remove the control dependence node.

Step 5: Remove all nodes which are data dependent on the control dependence node.

Step 6: Repeat steps 2-5 until all independent control program nodes and their dependencies are removed.

Steps 1-6 are executed for both backward and forward slices.

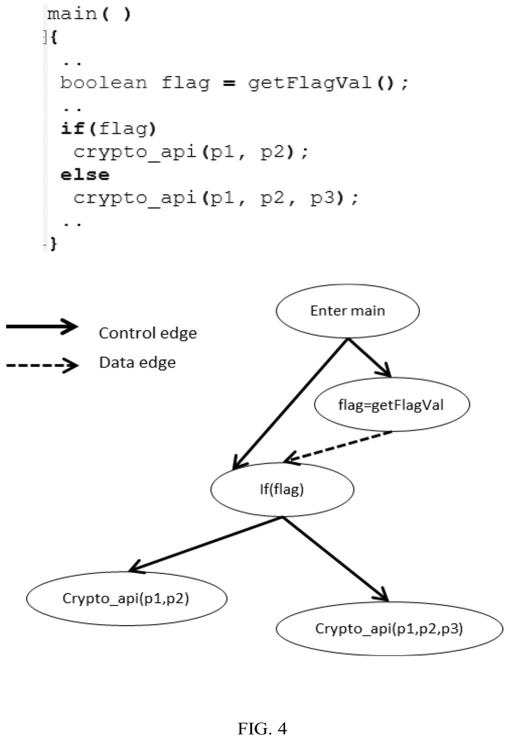

A sample program that invokes crypto API in "if" and "else" branches of code is depicted in FIG. 4. Invocation of APIs is controlled by the value of "flag" variable. If any of crypto API is taken as slicing criterion then, "if" statement becomes an independent control node since the value of "flag" is not used by either of crypto APIs invocations. Therefore, the code refinement component removes the node representing "if(flag)" statement. Moreover, the flag variable is computed by a "getFlagVal" method as shown in FIG. 4. Hence, the slice node capturing this program statement is removed as well. Slicing computes program fragments which are necessary to be replaced/updated when classical cryptography APIs are going to be replaced with PQC APIs. However, there is a subtle relationship between different components of an application which are not captured through the slicing. The coupling module extracts such relationships. For example, coupling between classes through inheritance is captured through the coupling module. Moreover, there is a behavior coupling between components which existing coupling approaches do not capture. Example of the behavior coupling is depicted in the code segment below.

$$class\ A$$

$$\{$$

$$public\ static\ byte\ []\ generateSalt\ ()$$

$$\{$$

$$SecureRandom\ random\ =\ new\ SecureRandom\ ();$$

$$byte\ []\ salt\ =\ new\ byte\ [8];$$

$$random.nextBytes\ (salt);$$

```
            }

        }

        Class B

        {

        static String useSalt ()

        {

        byte [] salt = A.generateSalt ();

        if (salt.length != 8)

        return "insufficient salt size";

        ..

        }

        }
```

As shown, there is behavior coupling between class A and class B. Class A has function "generateSalt" which computes the salt and returns its value. This salt value is used in the "useSalt" method of class B. Before using the salt value, it checks its length (number of bytes). The "generateSalt" value does not compute secure salt value as per prevailing security standard. Therefore, while migrating application from crypto APIs to PQC APIs, the "generateSalt" needs to be updated as well. In this scenario, the check on byte length in "useSalt" fails even if "generateSalt" returns the correct value as per the security standard. The code refinement component marks the constraint check for the update.

Further, at step 212 of the method 200, the system 100 computes, via the one or more hardware processors 102, a number of LoC impacted by the one or more cryptographic APIs, from the plurality of code fragments extracted. The LoC is determined by mapping extracted binary code fragments to corresponding source code fragments.

Further, at step 214 of the method 200, the system 100 estimates, via the one or more hardware processors 102, a cyclomatic complexity for one or more components present in the refined slicing output and the refined coupling output. The cyclomatic complexity captures the number of independent paths through the program's source code which relates to the function's complexity and maintainability. Function's complexity will have bearing in migration efforts computation. The system 100 computes the cyclomatic complexity of every component which is part of backward and forward slices as well as those components which are part of coupling output. The Cyclomatic complexity is a software metric used to measure the number of independent paths through a program source code. If a path is defined as a set of edges then Two paths A and B are said to be independent if either A-B or B-A is non empty. The cyclomatic complexity can be calculated with respect to functions, modules, methods or classes within a program. In an embodiment, the system 100 computes the cyclomatic complexity for one or more components of a software that are present in the refined slicing output and the refined coupling output.

The cyclomatic complexity metric is based on a control flow representation of the program source code. Control flow depicts a program as a graph which consists of Nodes and Edges. In the graph, nodes represent program statements while edges represent control flow between the nodes.

In the example depicted in FIG. 4, the number of independent paths is two and are:

$$A, C, D \parallel A, C, E$$

Where, {A = Enter main || flag=getFlagVal, C = if(flag), D = Crypto_api(p1,p2), E = Crypto_api(p1,p2,p3)}

To calculate the cyclomatic complexity of any code snippet, the following formula is used:

$$CC = E - N + 2P$$

where CC = cyclomatic complexity, E = Number of edges, N = Number of nodes, P = Total number of connect component in the graph. This formula provides an estimation of the cyclomatic complexity.

Various steps involved in the process of cyclomatic complexity calculation are given below: -

Step 1: Based on program statements of a refined slice as computed by the code refinement component, map program statements of the slice to functions.

Step 2: Classify the functions based on their memberships of components, and, identify components involved in the slice. Here 'Component' means class and the membership refers to which class the function belongs.

Step 3: For a component and its functions, pick a function of the component without outgoing edges in call graph or a function which does not have an outgoing edge into function of same component.

Step 4: Calculate the cyclomatic complexity of the function as the number of independent paths. Mark the function as leaf node function in the call graph. Label the cyclomatic complexity value of the function as FUNCTION_CYCLOMATIC_COMPLEXITY.

Step 5: Collect all leaf node functions of the component based on steps 3 and 4. Assign all leaf node functions depth 0. Label it current_depth.

Step 6: Put all leaf node functions in queue.

Step 7: Retrieve a function from the queue. Label it current_function. Retrieve edges which are coming into the current_function.

Step 8: Fetch the value of current_depth assigned to current_function.

Step 9: Traverse the incoming edge. Put the function reached through the incoming edge in the queue. Label it PRED_FUNCTION. Assign its depth value to current_depth + 1.

Step 10: At the method invocation program statement of PRED_FUNCTION that results in the call to the function at current_depth, calculate the number of independent paths reaching the program statement. Label the number of independent paths as ALL_PATHS_CALL_TO_LEVEL_LESS_FUNCTION.

Step 11: Compute the cyclomatic complexity as:

$$\text{FUNCTION\_CYCLOMATIC\_COMPLEXITY} =$$
$$\text{FUNCTION\_CYCLOMATIC\_COMPLEXITY} +$$
$$\text{FUNCTION\_CYCLOMATIC\_COMPLEXITY} *$$
$$\text{ALL\_PATHS\_CALL\_TO\_LEVEL\_LESS\_FUNCTION.}$$

Step 12: Repeat steps 9 and 10 for all method invocation program statements.

Step 13: Repeat steps 8 - 11 unless there is no incoming edge left to traverse.

Step 1: Repeat steps 6 - 11 unless the queue is empty.
13) Sum the cyclomatic complexity (FUNCTION_CYCLOMATIC_COMPLEXITY) of all functions. Label it COMPONENT_CYCLOMATIC_COMPLEXITY.

Steps 3 - 13 compute the cyclomatic complexity of component.

In the example depicted in FIG. 4, the number of independent paths reaching crypto_api(p1, p2) and crypt_api(p1, p2, p3) are 1. Assuming the number of independent paths for crypto_api(p1, p2) and crypto_api(p1, p2, p3) are 3 and 4 respectively. Then, the cyclomatic complexity of main function as per formula of Step 11 is 7.

Further, at step 214 of the method 200, the system 100 estimates, via the one or more hardware processors 102, an effort of migration using the cyclomatic complexity, and the number of LoC impacted by the one or more cryptographic APIs. This is done by the Effort Estimation calculator as depicted in FIG. 1B. The code fragment refinement component outputs the application source code fragments and the total number of lines which should be replaced while migrating application from modem cryptography APIs to Post Quantum Cryptography APIs. The efforts estimation calculator requires information about PQC APIs on how many Lines of Code they require to get integrated with application. Information about PQC APIs, and the code integration requirement are stored in a PQC APIs database. The PQC APIs database stores mappings between modem crypto APIs and their PQC equivalent along with additional metadata about minimum Lines of Code integration requirement, associated ease of use, skill requirements to integrate the code, and so on. The effort estimation calculator queries the PQC APIs database for every modem cryptography API, which is used as the slicing criterion to extract equivalent PQC API and its code integration requirement. The effort estimation component then combines the LoC obtained from code fragment refinement component and the information retrieved from the PQC API database, to estimate the effort of migration. At this step, the efforts estimation calculator uses the cyclomatic complexity of functions obtained from code fragment refinement component to arrive at efforts required for migration.

Method 200 may be used for estimating the migration efforts based on changes required in an application code base due to replacement of quantum unsafe modem crypto APIs by the Post Quantum Cryptography APIs. The approach can be extended to estimation of migration efforts if any library/module needs to be changed or upgraded or replaced, provided the enumeration of associated APIs is available.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein address unresolved problem of ability to accurately estimate the cost needed to complete migration of application. The embodiment, thus provides a mechanism for cost estimation of migration of application into PQC.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor implemented method (200), comprising:

   identifying (202), via one or more hardware processors, one or more cryptographic Application Programing Interfaces (APIs) in an input application;
   performing (204), via the one or more hardware processors, forward slicing and backward slicing for the one or more cryptographic APIs,
   based on a slicing criterion, to generate a slicing output comprising a plurality of slices of the one or more cryptographic APIs;
   determining (206), via the one or more hardware processors, a plurality of Lines of Code (LoC) for at least one of the one or more cryptographic APIs, that requires replacement;
   performing (208), via the one or more hardware processors, a coupling calculation between one or more components within the input application, to generate a coupling output capturing how the one or more components are connected with each other, in the input application;
   extracting (210), via the one or more hardware processors, a plurality of code fragments in the LoC by refining the slicing output and the coupling output;
   computing (212), via the one or more hardware processors, a number of LoC impacted by the one or more cryptographic APIs, from the plurality of code fragments extracted;
   estimating (214), via the one or more hardware processors, a cyclomatic complexity for one or more components present in the refined slicing output and the refined coupling output; and
   estimating (216), via the one or more hardware processors, an effort of migration using the cyclomatic complexity, and the number of LoC impacted by the one or more cryptographic APIs.

2. The processor implemented method as claimed in claim 1, wherein the one or more cryptographic APIs in the input application are identified by executing one or more inventory rules.

3. The processor implemented method as claimed in claim 1, wherein the forward slicing and the backward slicing are performed on a System Dependence Graph (SDG) that captures a plurality of dependencies between a plurality of program statements of the input application.

4. The processor implemented method as claimed in claim 3, wherein,
   refining the slicing output comprises removing one or more of the plurality of program statements which do not contribute to code replacement, and refining the coupling output comprises of including one or more of the plurality of program statements that impacts behavior of the input application, to refine the plurality of slices.

5. A system (100), comprising:

   one or more hardware processors (102);
   a communication interface (112); and
   a memory (104) storing a plurality of instructions, wherein the plurality of instructions cause the one or more hardware processors to:

   identify one or more cryptographic Application Programming Interfaces (APIs) in an input application;
   perform forward slicing and backward slicing for the one or more cryptographic APIs, based on a slicing criterion, to generate a slicing output comprising a plurality of slices of the one or more cryptographic APIs;
   determine a plurality of Lines of Code (LoC) for at least one of the one or more cryptographic APIs, that requires replacement;
   perform a coupling calculation between one or more components within the input application, to generate a coupling output capturing how the one or more components are connected with each other, in the input application;

extract a plurality of code fragments in the LoC by refining the slicing output and the coupling output;
compute a number of LoC impacted by the one or more cryptographic APIs, from the plurality of code fragments extracted;
estimate a cyclomatic complexity for one or more components present in the refined slicing output and the refined coupling output; and
estimate an effort of migration using the cyclomatic complexity, and the number of LoC impacted by the one or more cryptographic APIs.

6. The system as claimed in claim 5, wherein the one or more hardware processors are configured to identify the one or more cryptographic APIs in the input application by executing one or more inventory rules.

7. The system as claimed in claim 5, wherein the one or more hardware processors are configured to perform the forward slicing and the backward slicing on a System Dependence Graph (SDG) that captures a plurality of dependencies between a plurality of program statements of the input application.

8. The system as claimed in claim 7, wherein the one or more hardware processors are configured to:

refine the slicing output by removing one or more of the plurality of program statements which do not contribute to code replacement, and
refine the coupling output by including one or more of the plurality of program statements that impacts behavior of the input application, to refine the plurality of slices.

9. One or more non-transitory machine-readable information storage mediums comprising one or more instructions which when executed by one or more hardware processors cause:

identifying one or more cryptographic Application Programing Interfaces (APIs) in an input application;
performing forward slicing and backward slicing for the one or more cryptographic APIs, based on a slicing criterion, to generate a slicing output comprising a plurality of slices of the one or more cryptographic APIs;
determining a plurality of Lines of Code (LoC) for at least one of the one or more cryptographic APIs, that requires replacement;
performing a coupling calculation between one or more components within the input application, to generate a coupling output capturing how the one or more components are connected with each other, in the input application;
extracting a plurality of code fragments in the LoC by refining the slicing output and the coupling output;
computing a number of LoC impacted by the one or more cryptographic APIs, from the plurality of code fragments extracted;
estimating a cyclomatic complexity for one or more components present in the refined slicing output and the refined coupling output; and
estimating an effort of migration using the cyclomatic complexity, and the number of LoC impacted by the one or more cryptographic APIs.

10. The one or more non-transitory machine-readable information storage mediums of claim 9, wherein the one or more cryptographic APIs in the input application are identified by executing one or more inventory rules.

11. The one or more non-transitory machine-readable information storage mediums as claimed in claim 9, wherein the forward slicing and the backward slicing are performed on a System Dependence Graph (SDG) that captures a plurality of dependencies between a plurality of program statements of the input application.

12. The one or more non-transitory machine-readable information storage mediums as claimed in claim 11, wherein, refining the slicing output comprises removing one or more of the plurality of program statements which do not contribute to code replacement, and refining the coupling output comprises of including one or more of the plurality of program statements that impacts behavior of the input application, to refine the plurality of slices.

100

MEMORY 104

MODULES 106

REPOSITORY 110

108

I/O INTERFACE 112

HARDWARE PROCESSORS 102

FIG. 1A

FIG. 1B

identifying, via one or more hardware processors, one or more cryptographic APIs in an input application — 202

performing, via the one or more hardware processors, forward slicing and backward slicing for the one or more cryptographic APIs, based on a slicing criterion, to generate a slicing output comprising a plurality of slices of the one or more cryptographic APIs — 204

determining, via the one or more hardware processors, a plurality of Lines of Code (LoC) for at least one of the one or more cryptographic APIs, that requires replacement — 206

performing, via the one or more hardware processors, a coupling calculation between one or more components within the input application, to generate a coupling output capturing how the one or more components are connected with each other, in the input application — 208

extracting, via the one or more hardware processors, a plurality of code fragments in the LoC by refining the slicing output and the coupling output — 210

computing, via the one or more hardware processors, a number of LoC impacted by the one or more cryptographic APIs, from the plurality of code fragments extracted — 212

estimating, via the one or more hardware processors, a cyclomatic complexity for one or more components present in the refined slicing output and the refined coupling output — 214

estimating, via the one or more hardware processors, an effort of migration using the cyclomatic complexity, and the number of LoC impacted by the one or more cryptographic APIs — 216

200

FIG. 2

FIG. 3

```
main( )
]{
  ..
  boolean flag = getFlagVal();
  ..
  if(flag)
   crypto_api(p1, p2);
  else
   crypto_api(p1, p2, p3);
  ..
}
```

FIG. 4

Europäisches
Patentamt

European
Patent Office

Office européen
des brevets

# EUROPEAN SEARCH REPORT

**Application Number**

EP 25 21 9133

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Meng Wenjun: "Slicing-Based Coupling Measurements", , 1 August 2003 (2003-08-01), pages 1-105, XP093385317, Retrieved from the Internet: URL:https://spectrum.library.concordia.ca/id/eprint/2300/1/MQ83916.pdf * abstract * * page 6, paragraph 1 * * page 9, section 2.1.2, paragraph 1 - page 11, paragraph 1 * * page 50, section 5, paragraph 1 - page 51, paragraph 2 * ----- | 1-12 | INV. G06F8/75 G06F11/3604 G06F8/71 G06F8/72 |
| A | Anonymous: "Program slicing - Wikipedia", , 3 July 2024 (2024-07-03), pages 1-4, XP093385430, Retrieved from the Internet: URL:https://en.wikipedia.org/w/index.php?title=Program_slicing&oldid=1232401516 * page 1, paragraph 1 - paragraph 2 * ----- | 1-12 | |
| A | Anonymous: "Cyclomatic complexity - Wikipedia", , 29 August 2024 (2024-08-29), pages 1-8, XP093385438, Retrieved from the Internet: URL:https://en.wikipedia.org/w/index.php?title=Cyclomatic_complexity&oldid=1242979233 * page 1, paragraph 1 - paragraph 3 * ----- | 1-12 | |

**TECHNICAL FIELDS SEARCHED (IPC)**

G06F

The present search report has been drawn up for all claims

| Place of search | Date of completion of the search | Examiner |
|---|---|---|
| Munich | 9 April 2026 | Milasinovic, Goran |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 764 837 A1**

## REFERENCES CITED IN THE DESCRIPTION

### Patent documents cited in the description

- IN 202421101331
- IN 202321012791